(19) Europäisches Patentamt
European Patent Office
Office européen des brevets

(11) Veröffentlichungsnummer: **0 075 697**
**B1**

(12) # EUROPÄISCHE PATENTSCHRIFT

(45) Veröffentlichungstag der Patentschrift: **29.05.85**

(51) Int. Cl.⁴: **C 07 F 7/18**

(21) Anmeldenummer: **82107319.4**

(22) Anmeldetag: **12.08.82**

(54) **Verfahren zur Herstellung von gegebenenfalls polymeren Organosilanestern mit Polyolen.**

(30) Priorität: **30.09.81 DE 3138835**

(43) Veröffentlichungstag der Anmeldung: **06.04.83 Patentblatt 83/14**

(45) Bekanntmachung des Hinweises auf die Patenterteilung: **29.05.85 Patentblatt 85/22**

(84) Benannte Vertragsstaaten: **AT BE CH DE FR GB IT LI LU NL SE**

(56) Entgegenhaltungen:
**DE - A - 2 513 476**
**DE - B - 1 040 163**
**FR - A - 2 150 978**

(73) Patentinhaber: **DYNAMIT NOBEL AKTIENGESELLSCHAFT, Postfach 1209, D-5210 Troisdorf, Bez. Köln (DE)**

(72) Erfinder: **Kötzsch, Hans-Joachim, Dr., Fecampring 28, D-7888 Rheinfelden (DE)**
Erfinder: **Vahlensieck, Hans-Joachim, Dr., Im Habiken 2, D-7867 Wehr (DE)**

EP 0 075 697 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist ein Verfahren zur Herstellung von Glycolestern von Organosilanen, bei denen mindestens zwei Organosilicium-Gruppierungen über einen Glycol- oder Polyglycolrest esterartig verknüpft sind. Die Verbindungen eignen sich als Hydraulikflüssigkeiten, Wärmeträgeröle oder System-Vermittler.

Es ist beispielsweise aus der DE-OS 2 445 552 bekannt, daß einige Organosilanester ggf. polyfunktioneller organischer Hydroxiverbindungen in Hydraulik-Öl-Formulierungen die Zuverlässigkeit und Sicherheit in hydraulisch betriebenen mechanischen Systemen gegen sehr oft lebensgefährliche Ausfälle sehr gut garantieren können. Dies ergibt sich überwiegend aufgrund ihrer wasserbindenden Eigenschaften, ihrer Gummiverträglichkeit und ihrer Hitzestabilität. Sie stellen daher gegenüber den bisherigen technischen Möglichkeiten einen erheblichen Fortschritt dar.

Im wesentlichen handelt es sich bei den genannten Verbindungen um solche der Formel

$$R-O-\left[\underset{R'}{\overset{R''}{Si}}-\left(O-\underset{R'''}{CH}-CH_2\right)_n-O\right]_p\underset{R'}{\overset{R''}{Si}}-O-R \qquad (I)$$

in der

R = ein Glycol-Substituent der allgemeinen Formel

$$-\left(CH_2-\underset{R'''}{CH}-O\right)_g-R'''',\ (R''''=C_1\text{–}C_4\text{-Alkyl},\ q=1\text{–}10);$$

R' = RO– oder ein Substituent aus der Gruppe R";
R" = Alkyl ($C_1$–$C_{20}$), ggf. verzweigt, Alkenyl, Cycloalkyl oder Aryl;
R''' = H oder $CH_3$;
n = 1–12;
p = 1–10 (durchschnittlicher Kondensationsgrad) ist und ggf. deren Verzweigungsprodukte, wenn R' = RO– ist.

Die gewünschte wirtschaftliche Nutzung dieser Stoffe wurde bisher jedoch dadurch verhindert, daß die großtechnische Herstellung dieser Verbindungen erhebliche Schwierigkeiten bereitete.

Die Herstellung dieser begehrten Stoffe soll bisher in Ermangelung eines praktikableren Verfahrens gemäß dem oben genannten Schutzrecht in der Weise erfolgen, daß man ein Chlorsilan der Formel

$$R''-\underset{X}{Si}-Cl_2 \qquad (II)$$

in der X entweder Chlor oder R' der oben genannten Bedeutung darstellt, und R" die oben genannte Bedeutung besitzt, in Gegenwart eines Chlorwasserstoff abfangenden Amins (z. B. Pyridin) zunächst partiell mit einem Glycol der Formel

$$HO-\left(\underset{R'''}{CH}-CH_2-O\right)_n-H \qquad (III)$$

in der R''' und n die oben wiedergegebene Bedeutung besitzen, verestert und anschließend die Veresterung ebenfalls in Gegenwart eines Amins mit einem Glycolether der Formel

$$H-O-\left(\underset{R'''}{CH}-CH_2\right)_q-OR'''' \qquad (IV)$$

in der R''', R'''' und q die oben wiedergegebene Bedeutung besitzen, fortsetzt und komplettiert. Gegebenenfalls wurden die beiden Glycole auch in umgekehrter Reihenfolge eingesetzt. Nach dem Ende der Reaktion war die zwangsläufig als Nebenprodukt anfallende, große und unverwertbare Menge an Amin-Hydrochlorid abzutrennen und die infolge des gewaltigen Salzanfalls unbedingt erforderliche Masse an Lösungsmittel abzudampfen.

Schließlich mußten dann die noch im Produkt gelöst enthaltenen Überreste an Salz in aufwendiger

Nachreinigung entfernt werden, weil sie bei der Hydraulikanwendung nicht zu tolerieren sind. Die Ausbeuten dieser mühseligen Herstellungsmethode überschritten in keinem Falle 70%. Die Nachteile dieser bisher einzigen Darstellungsweise liegen auf der Hand.

Um die mit der oben beschriebenen Darstellungsweise verbundenen Schwierigkeiten zu vermeiden, wurde auch schon versucht, durch ggf. katalysierte Umesterung von Alkoxisilanen der Formel

$$\underset{\displaystyle Y}{R''-\overset{}{\underset{|}{Si}}(OR'''')_2} \qquad (V)$$

in der Y einen Substituenten R' mit der oben genannten Bedeutung oder einen Substituenten —OR'''' darstellt, und R'''' ebenfalls die oben genannte Bedeutung besitzt, mit Glycolen bzw. Glycolmonoethern zu den gewünschten Produkten zu kommen. Diese Reaktionen verliefen jedoch nur sehr langsam und unvollständig. Dabei erwies es sich aber regelmäßig, daß diese Verfahrensweisen der Umesterung nicht zu den gewünschten Produkten führen, sondern Produkte anderer Zusammensetzungen liefern. Insbesondere wird die niedere Alkoxigruppe äußerst hartnäckig festgehalten, was die Produkte für hydraulische Anwendungen ungeeignet macht, weil sie z. B. wegen zu geringer GILPIN-Vapour-Lock-Temperatur die Funktionsfähigkeit beeinträchtigen. Diese entmutigenden Ergebnisse legten den Schluß nahe, daß der Weg der Umesterung aufgrund der erwähnten Nachteile wenig Erfolg verspricht.

Es bestand deshalb die Aufgabe, für die genannten Glycolester ein Herstellungsverfahren zu finden, das die oben genannten gravierenden Nachteile nicht zeigt. In Erfüllung dieser Aufgabe wurde nun ein Verfahren gefunden, das durch die im Anspruch 1 genannten Maßnahmen gekennzeichnet ist. Die erfindungsgemäße Verfahrensweise erfolgt überraschend leicht ohne Katalysator und bereits unter milden Bedingungen rasch und vollständig zu den gesuchten Verbindungen der allgemeinen Formel I, wobei die von den einkondensierten Glycolen der allgemeinen Formel III verdrängten Glycolether der allgemeinen Formel IV destillativ zurückgewonnen werden. Das Verhältnis der Verbindungen VI und III zueinander bestimmt dabei den in der erfindungsgemäß hergestellten Verbindung I erzielten durchschnittlichen Kondensationsgrad p.

Das Molverhältnis des Glycolesters VI zu dem Alkylenglycol (III) soll höchstens 2 : 1 betragen; je größer der Kondensationsgrad p gewünscht ist, um so weniger Glycolester VI ist erforderlich.

Die Ausbeuten des erfindungsgemäßen Verfahrens sind praktisch quantitativ und die Produkte sind sofort ohne weitere Reinigung mit der sehr hohen Qualitätsanforderung in Hydraulik-Öl-Formulierungen anwendbar. Auch in Kombination mit weiteren Conditioners für diese Formulierungen wie z. B. Stabilisatoren, sind die gemäß dem erfindungsgemäßen Verfahren hergestellten Produkte ohne Schwierigkeiten verträglich.

Nach dem erfindungsgemäßen Verfahren hergestellte Stoffe sind beispielsweise Monomere bzw. Kondensate von 9,9,17,17-Tetramethyl-2,5,8,10,13,16,18,21,24-nonaoxa-9,17-disilapenta-cosan der Struktur

$$CH_3O(CH_2CH_2O)_2[Si(CH_3)_2(OCH_2CH_2)_2O]_{1\ bis\ 10}Si(CH_3)_2(OCH_2CH_2)_2OCH_3$$

12,12,23,23-Tetramethyl-2,5,8,11,13,16,19,22,24,27,30,33-dodecaoxa-12,23-disilatetratriacontan der Struktur

$$CH_3O(CH_2CH_2O)_3[Si(CH_3)_2(OCH_2CH_2)_3O]_{1\ bis\ 10}Si(CH_3)_2(OCH_2CH_2)_3OCH_3$$

15,15,29,29-Tetramethyl-2,5,8,11,14,16,19,22,25,28,30,33,36,39,42-pentadecaoxa-15,29-disilatritetracontan der Struktur

$$CH_3O(CH_2CH_2O)_4[Si(CH_3)_2(OCH_2CH_2)_4O]_{1\ bis\ 10}Si(CH_3)_2(OCH_2CH_2)_4OCH_3$$

3,6,9,13-Tetramethyl-4,4,12,12-tetra-(2-ethoxipropoxi)-5,8,11-trioxa-4,12-disilapentadecan der Struktur

$$\left(C_2H_5O-\overset{\displaystyle CH_3}{\overset{|}{C}H}-CH_2-O\right)_2\left[-\overset{\displaystyle i-C_4H_9}{\overset{|}{Si}}(-O-\overset{\displaystyle CH_3}{\overset{|}{C}H}-CH_2)_2-O-\right]-\overset{\displaystyle i-C_4H_9}{\overset{|}{Si}}-\left(OCH_2-\overset{\displaystyle CH_3}{\overset{|}{C}H}-OC_2H_5\right)_2$$

Geeignete Ausgangsstoffe gemäß der allgemeinen Form VI sind beispielsweise 9,9-Dimethyl-2,5,8,10,13,16-hexaoxa-9-silaheptadecan, 15,15-Dimethyl-2,5,8,11,14,16,19,22,25,28-decaoxa-15-silanonacosan, Ethyl-tris-(2-ethoxipropoxi)-silan. Diese Ausgangsstoffe sind bekanntlich in einfacher Weise gemäß US-Patent 4 228 092 aus den entsprechenden Chlorsilanen durch direkte Veresterung unter Chlorwasserstoffabspaltung mit den entsprechenden Glycolmonoethern herzustellen.

Geeignete Kondensationsmittel gemäß der allgemeinen Formel III sind z. B. Ethylenglycol, Triethylenglycol, Polyethylenglycol 500, 1,2-Propylenglycol, Di-1,2-propylenglycol, Tri-1,2-propylenglycol.

Es ist zweckmäßig, wenn das einzusetzende Alkylenglycol (VI) einen Siedepunkt besitzt, der über dem Siedepunkt des Glycolmonoalkylethers (IV) liegt, der aus dem Reaktionsgemisch abdestilliert wird.

Die erfindungsgemäße Herstellung der Verbindungen der allgemeinen Formel I wird in einfacher und wirksamer Weise am besten so ausgeführt, daß man die beiden Ausgangsstoffe III und VI in dem vom gewünschten Kondensationsgrad p bestimmten Verhältnis vermischt und das Gemisch in die Blase einer gut trennenden Vakuumkolonne überführt. Dort läßt man es bei Temperaturen bis zu 220°C reagieren, bis das einzukondensierende Glycol so weit mit den Silanestern (VI) reagiert hat, daß mindestens eine teilweise Freisetzung des bei der Reaktion entstehenden Glycolmonoalkylethers IV stattgefunden hat. Diese Zeit hängt sowohl von der Temperatur als auch graduell von den eingesetzten Verbindungen ab. Sie liegt zwischen ca. 50 Minuten und 12 Stunden. Vorzugsweise wird die Temperatur so eingestellt, daß mit der Destillation nach Ablauf von 2 bis 4 Stunden begonnen werden kann. Dabei liegen die bevorzugten Temperaturen unterhalb der Siedepunkte der beteiligten Komponenten, vorzugsweise zwischen 90 und 160°C. Anschließend wird der jeweils verdrängte Glycolmonoalkylether der allgemeinen Formel IV in der Weise fraktioniert überdestilliert, daß eventuelle Restmengen noch nicht vollständig einkondensierten Glycols der allgemeinen Formel III nicht mit übergehen. Diese Abdestillation kann auch unter Vakuum durchgeführt werden.

Für diese erfindungsgemäße Destillationsmethode haben sich Feinvakuumkolonnen mit drei und mehr theoretischen Böden besonders bewährt. Am Ende der Umesterung kann das Produkt in einer solchen Kolonne bei hohem Vakuum sogar soweit von gerade noch flüchtigen Stoffen befreit werden, daß es alle Qualitätsanforderungen aus dem hydraulischen Anwendungsbereich erfüllt. Gegebenenfalls kann die Qualität durch geringfügiges weiteres Einengen in einer Kurzwegdestillation oder in einem Fallfilm- oder Dünnschichtverdampfer noch gesteigert werden.

Nach dem erfindungsgemäßen Verfahren synthetisierte Glycolorganosilanester der allgemeinen Formel I eignen sich sowohl selbst als Hydrauliköl, ggf. in Verbindung mit weiteren Conditioners beispielsweise wie Stabilisatoren, antikorrosiven Additiven, als auch als aufwertendes Additiv in anderen Hydraulik-Formulierungen. Darüber hinaus eignen sie sich wegen ihrer relativ hohen Wärmekapazität auch als Wärme- bzw. Kälteübertragungsmittel. Aufgrund ihrer ungewöhnlichen Wärmestandfestigkeit zeigen sie in geschlossenen Wärmeübertragungskreisläufen selbst bei Betriebstemperaturen um 340°C eine beachtliche Zeitstandfestigkeit. Ihre besonders gute Conditionerverträglichkeit macht sie außerdem geeignet als System-Vermittler für miteinander nicht mischbare Stoffe, z. B. werden Chlorparaffine in Gegenwart der erfindungsgemäß hergestellten Stoffe mischbar mit Siliconölen.

## Beispiel

Die 2 $m^3$-Blase einer Sulzer-Kolonne mit etwa acht theoretischen Böden wurde mit 330 kg (2,2 kMol) Triethylenglycol und 1538 kg (4 kMol) 12,12-Dimethyl-2,5,8,11,13,16,19,22-octaoxa-12-silatricosan ($Kp._{0,1\ mbar}$ 184°C; $D._1^{20}$ 1,0396) befüllt und 3 Stunden lang auf 128°C temperiert. Danach wurden beim Rücklaufverhältnis 5 und langsam auf 202°C ansteigender Blasentemperatur bei einem Vakuum von 0,6 mbar und 88°C Kopftemperatur innerhalb von ca. 5 Std. 716 kg Triethylenglycolmonomethylether in wiederverwendungsfähiger, hoher Reinheit abdestilliert. Danach wurde das Vakuum innerhalb ca. 15 Minuten auf 0,02 mbar abgesenkt, wobei weitere 22 kg Destillat erhalten wurden, die neben weiterem Ethylenglycolmonomethylether etwas Ausgangsester enthielten. Schließlich wurde das Vakuum mit trockenem Stickstoff aufgehoben. Aus der Blase wurden 1130 kg Produkt (ca. 99% Ausbeute) an klarem, farblosem Produkt der Struktur

$$CH_3O(CH_2CH_2O)_3[Si(CH_3)_2(OCH_2CH_2)_3O]_p Si(CH_3)_2(OCH_2CH_2)_3OCH_3$$

mit p zwischen 1,2 und 1,6 abgefüllt.

Das Produkt besitzt einen Si-Gehalt von 9,86%. Die Dichte beträgt $D._4^{20} = 1,057$.

An Viskositätswerten wurden

3,65 mPa · sec (95°C)
11,75 mPa · sec (38°C) und
990,44 mPa · sec (−40°C)

gemessen. Der Siedebeginn bei Normaldruck lag bei 377°C. Der Flammpunkt lag bei 223°C.

## Patentansprüche

1. Verfahren zur Herstellung von Organosilanestern von Polyolen der Formel

$$R-O-\left[\overset{R''}{\underset{R'}{Si}}-\left(O-\underset{R'''}{CH}-CH_2\right)_n-O\right]_p-\overset{R''}{\underset{R'}{Si}}-O-R \qquad (I)$$

in der

R = ein Glycol-Substituent der allgemeinen Formel

$$-\left(CH_2-\underset{R'''}{CH}-O\right)_q-R'''',\ (R'''' = C_1-C_4\text{-Alkyl};\ q = 1-10);$$

R' = RO– oder ein Substituent aus der Gruppe R'';
R'' = Alkyl ($C_1-C_{20}$), ggf. verzweigt, Alkenyl, Cycloalkyl oder Aryl;
R''' = H oder $CH_3$;
n = 1–12;
p = 1–10 (durchschnittlicher Kondensationsgrad) ist,

dadurch gekennzeichnet, daß man Siliciumester der allgemeinen Formel

$$(R-O)_2-\underset{R'}{Si}-R'' \qquad (VI)$$

in der R, R' und R'' die oben aufgeführten Bedeutungen besitzen, mit Glycolen der allgemeinen Formel

$$HO-\left(\underset{R'''}{CH}-CH_2-O-\right)_n H \qquad (III)$$

in dem vom gewünschten Kondensationsgrad p bestimmten Verhältnis bei Temperaturen von 20 bis 220°C vermischt und anschließend den dabei freiwerdenden Glycol-monoalkylether der allgemeinen Formel

$$H-\left(O-\underset{R'''}{CH}-CH_2-\right)_q OR'''' \qquad (IV)$$

destillativ abfraktioniert.

2. Verfahren gemäß Anspruch 1, dadurch gekennzeichnet, daß man vor dem Abdestillieren des Glycolmonoalkylethers das Gemisch bis zu 12 Stunden reagieren läßt.

3. Verfahren gemäß Anspruch 1 oder 2, dadurch gekennzeichnet, daß die Temperatur während der Reaktionszeit zwischen 90 und 160°C liegt.

**Claims**

1. Process for the preparation of organosilane esters of polyols of the formula

$$R-O-\left[\overset{R''}{\underset{R'}{Si}}-\left(O-\underset{R'''}{CH}-CH_2\right)_n-O\right]_p-\overset{R''}{\underset{R'}{Si}}-O-R \qquad (I)$$

in which

R = a glycol substituent of the general formula

$$-\left(CH_2-\underset{\underset{R'''}{|}}{C}H-O\right)_q-R''''$$

wherein R'''' = $C_1$—$C_4$ alkyl and q = 1—10

R' = RO or group R";
R" = alkyl ($C_1$—$C_{20}$), optionally branched, alkenyl, cycloalkyl or aryl;
R''' = H or $CH_3$;
n = 1 to 12;
p = 1—10 (average degree of condensation)

characterised in that silicon esters of the general formula

$$(R-O)_2-\underset{\underset{R'}{|}}{Si}-R'' \qquad \text{(VI)}$$

in which R, R' and R" possess the above set out meanings, are mixed with glycols of the general formula

$$HO-\left(\underset{\underset{R'''}{|}}{C}H-CH_2-O-\right)_n H \qquad \text{(III)}$$

in the ratio determined by the desired degree of condensation at temperatures of 20 to 220°C and then the glycol-monoalkyl ethers of the general formula

$$H-\left(O-\underset{\underset{R'''}{|}}{C}H-CH_2-\right)_q OR'''' \qquad \text{(IV)}$$

being, therefore, liberated are fractionated off distillatively.

2. Process according to claim 1, characterised in that the mixture is allowed to react for up to 12 hours before the distilling off of the glycolmonoalkyl ether.

3. Process according to claim 1 or 2, characterised in that the temperature lies between 90 and 160°C during the reaction time.

**Revendications**

1. Procédé de fabrication d'esters organosilaniques de polyols de formule:

$$R-O-\left[\underset{\underset{R'}{|}}{\overset{\overset{R''}{|}}{Si}}-\left(O-\overset{\overset{R'''}{|}}{C}H-CH_2\right)_n-O\right]_p-\underset{\underset{R'}{|}}{\overset{\overset{R''}{|}}{Si}}-O-R \qquad \text{(I)}$$

avec

R = un substituant glycol de formule générale

$$-\left(CH_2-\underset{\underset{R'''}{|}}{C}H-O\right)_q-R''''$$

R'''' étant un alcoyle en $C_1$—$C_4$ et q = 1—10,

R' = RO— ou un groupe R",
R" = alcoyle ($C_1$—$C_{20}$) éventuellement ramifié, alcényle, cycloalcoyle ou aryle,
R''' = H ou $CH_3$,
n = 1—12,
p = 1—10 (degré moyen de condensation)

caractérise en ce qu'on mélange à des températures de 20 à 220°C un ester de silicium de formule générale

$$(R-O)_2-\underset{\substack{|\\ R'}}{Si}-R'' \qquad (VI)$$

dans laquelle R, R' et R'' possèdent les significations indiquées ci-dessus, avec des glycols de formule générale:

$$HO-\left(\underset{\substack{|\\ R'''}}{CH}-CH_2-O-\right)_n H \qquad (III)$$

dans le rapport établi par le degré de condensation p désiré, et en ce que par la suite on sépare par fractionnement distillatoire le monoalcoyl-éther de glycol mis ainsi en liberté, de formule générale:

$$H-\left(O-\underset{\substack{|\\ R'''}}{CH}-CH_2-\right)_q OR'''' \qquad (IV)$$

2. Procédé selon la revendication 1, caractérisé en ce qu'avant la séparation distillatoire du monoalcoyl-éther de glycol on laisse réagir le mélange jusqu'à concurrence de 12 heures.

3. Procédé selon la revendication 1 ou 2, caractérisé en ce que la température pendant la durée de la réaction se situe entre 90 et 160°C.